# EUROPEAN PATENT SPECIFICATION

(11) **EP 2 416 020 B1**
(45) Date of publication and mention of the grant of the patent: **15.10.2014**
(21) Application number: 10758803.0
(22) Date of filing: 31.03.2010
(51) Int. Cl.: F16B 19/00, B60R 19/24, F16B 5/00, F16B 5/06

(54) **CLIP**
KLEMME
CLIP

(30) Priority: 01.04.2009 JP 2009089009
(43) Date of publication of application: 08.02.2012
(73) Proprietor: Nifco INC., Yokohama-shi, Kanagawa 244-8522 (JP)
(72) Inventor: TANNO Akihiko, Yokohama-shi Kanagawa 244-8522 (JP)
(74) Representative: Gassner, Wolfgang
(86) International application number: PCT/JP2010/055889
(87) International publication number: WO 2010/114032

(56) References cited:
- FR-A1- 2 931 443
- JP-A- 2005 096 597
- JP-A- 2006 062 597
- JP-A- 2006 192 935
- JP-A- 2009 101 726
- JP-U- 2 024 185
- JP-U- 60 024 660
- US-A1- 2006 043 745

## Description

### TECHNICAL FIELD

The present invention relates to a clip according to the first part of claim 1 (FR 2 931 443 A1), that is interposed between an attached member and an attaching member when the attaching member is attached to the attached member. Particularly, the invention relates to a clip that is used in assembly of a bumper and a body to be able to decrease the number of components and labor.

### BACKGROUND ART

For example, as described in Patent Literature 1 (Japanese Patent Publication Laid-Open No. 8-230587), there is well known a vehicle bumper in which a leading end of a bumper side portion is formed along a wheel arch portion of a vehicle body. The vehicle bumper includes a hinge portion that is integrally formed at a leading end of a bumper side portion, a vehicle body wheel arch portion that is partially engaged with a vehicle body while integrally formed in the hinge portion, and an extension portion with which a gap between the bumper side portions is covered.

For example, as described in Patent Literature 2 (Japanese Utility Model Publication Laid-Open No. 6-45870), a bumper structure in which a retainer is attached to an end portion of the bumper is well known as a structure of the vehicle bumper. In the bumper structure, a rib including plural notch portions is provided in an end portion of a bumper face, and a projection piece projected outward from an outer surface of the end portion is provided with a thin-wall hinge portion interposed therebetween. An engaging protrusion is provided in the projection piece. The engaging protrusion is inserted in the notch portion and engaged with an edge portion of a throughhole in the retainer. The projection piece turns in the thin-wall hinge portion to insert the engaging protrusion in the notch portion, and the retainer is coupled to an inner surface of the rib while engaging the edge portion of the throughhole.

### CITATION LIST

### PATENT LITERATURE

Patent Literature 1: Japanese Patent Publication Laid-Open No. 8-230587
Patent Literature 2: Japanese Utility Model Publication Laid-Open No. 6-45870

### SUMMARY OF THE INVENTION

### PROBLEMS TO BE SOLVED BY THE INVENTION

In the conventional vehicle bumper, the number of components is decreased by providing the hinge portion, thereby facilitating assembling work. Additionally, the conventional vehicle bumper can easily be attached by bending the hinge portion. However, in the case that the vehicle bumper is attached while the clip is interposed between the attaching member and the attached member, frequently the hole cannot be made in the front surface of the attaching member, but the vehicle bumper is attached in the side portion. Unfortunately, the attaching portions of the attaching member, the attached member, and the clip in the side portion differ from one another in an axial direction of a screw when a first engaging portion that attaches the attaching member to the attached member with the clip interposed therebetween is coupled to a second engaging portion by a hinge. Particularly, engagement portion of the clip is hardly integrated with the body and the bumper when the clip, the body, and the bumper are commonly tightened between the body and the bumper.

In order to solve the above problems, an object of the invention is to provide a clip that can integrally attach the attaching member, the clip, and the attached member using the second engaging portion coupled to the clip and simultaneously solve the decrease of the number of components, the decrease of the assembly steps, and absorption of a dimension error among the attaching member, the clip, and the attached member.

### SOLUTION TO PROBLEM

A clip of the invention is described in claim 1, which is inter alea interposed between an attached member and an attaching member and retains the attaching member and the attached member while the attaching member and the attached member are fixed to each other, includes at least, a first engaging portion in which at least plural first engagement means attached to the attached member are provided; a second engaging portion in which an engagement direction of the second engaging portion differs from an engagement direction of the first engaging portion, second engagement means attached to both the attaching member and the attached member being provided; and coupling means for coupling the first engaging portion and the second engaging portion, the coupling means having flexibility.

In the clip of the invention, the coupling means is a hinge.

In the clip of the invention, each of the first engagement means and the second engagement means, which are provided in the first engaging portion and the second engaging portion, includes at least one grommet, and the grommet is tightened by inserting a screw.

In the clip of the invention, the engagement directions of the first engagement means and the second engagement means, which are provided in the first engaging portion and the second engaging portion, are provided in axis-line directions that differ from each other by about 90 degrees.

In the clip of the invention, the attaching member is an automotive bumper, the attached member is a vehicle main body, and the automotive bumper is attached to the vehicle main body.

### ADVANTAGEOUS EFFECT OF INVENTION

According to the invention, the coupling means of the clip is bent when the attaching member and the attached member are tightened by the clip, which allows the dimension error of each component to be absorbed.

According to the invention, when both the attaching member and the attached member are commonly-tightened by the second engaging portion of the clip, the direction (commonly-tightened direction) in which the attaching member and the attached member are attached to the second engaging portion differs from the direction in which the attached member is attached to the first engaging portion, thereby dispersing a stress generated between the attaching portions of the components. Accordingly, aging degradation can be suppressed.

According to the invention, variations in each other dimensions of the attaching member, the clip, and the attached member can be absorbed. Additionally, because the first engaging portion and the second engaging portion of the clip are coupled by the coupling means, the assembly steps can be reduced in the assembling work while the number of components is decreased.

According to the invention, the grommet that is tightened by inserting the screw is used as the engagement means provided in each of the first engaging portion and the second engaging portion. Therefore, not only the grommet plays a role in maintaining a waterproof property and in preventing a noise caused by a vibration, but also each of the first engaging portion and the second engaging portion can firmly be fixed with no use of a washer.

According to the invention, the grommet is provided in the oblique direction with respect to the second engaging portion, so that the grommet can be inserted straight in the hole of the attaching member while the coupling means is bent at a predetermined angle.

### BRIEF DESCRIPTION OF THE DRAWINGS

Fig. 1 is a plan view of a clip 11 according to an embodiment of the invention.
Fig. 2 is a front view of the clip 11.
Fig. 3 is a bottom view of the clip 11.
Fig. 4 is a rear view of the clip 11.
Fig. 5 is an exploded perspective view of a body 21 that is an example of an attached member, the clip 11, and a bumper 31 that is an example of the attaching member.
Fig. 6 is an assembly plan view of the body 21, the clip 11, and the bumper 31.
Fig. 7 is an enlarged view illustrating a state in which the body 21 and the bumper 31 are fixed by the clip 11.

### EMBODIMENT FOR CARRYING OUT THE INVENTION

A clip according to an embodiment of the invention, which retains an attaching member and an attached member while the attaching member and the attached member are fixed, includes at least a first engaging portion, a second engaging portion, and coupling means for coupling the first engaging portion and the second engaging portion. In the first engaging portion, at least plural first engagement means are provided in order to attach the clip to the attached member. For example, second engagement means is provided in the second engaging portion. An engagement direction of a plane of the second engagement means differs from that of the first engaging portion, and an axis-line direction of the second engagement means differs from that of the first engaging portion. The second engagement means simultaneously attaches the attaching member and the attached member. The coupling means couples the first engaging portion and the second engaging portion so as to be able to be bent and twisted between the first engaging portion and the second engaging portion.

When the attaching member is attached to the attached member using the clip of the embodiment, the clip is attached to the attached member by the plural first engagement means provided in the first engaging portion. For example, the attaching member is attached to the second engaging portion by a screw or the like while a leading end portion of the attaching member is engaged with the clip. Because the second engaging portion can bend the coupling means to turn with respect to the first engaging portion, the attached member and attaching member can commonly be tightened. In the clip, the attaching member and the attached member can be screwed by the first engaging portion and the second engaging portion, which differ from each other in the engagement direction, so that the stress generated in the fixed state is dispersed. Accordingly, the aging degradation can be reduced. The coupling means in the clip can absorb a variation in dimension of an attaching hole. In the clip, the first engaging portion and the second engaging portion are coupled by the coupling means, so that the assembly steps can be reduced in the assembling work while the number of components is decreased.

In the second engaging portion, similarly to the first engaging portion, an attaching member engagement receiving portion is provided such that the leading end portion of the attaching member can be engaged with the clip. The second engaging portion is formed into a shape in which the second engaging portion can be inserted between the attaching member and the attached member to commonly tighten the attaching member, the clip, and the attached member. A retaining pawl can be provided in the attaching member engagement receiving portion after the attaching member receives the attaching member engagement receiving portion.

In the clip of the invention, for example, the coupling means for coupling the first engaging portion and the second engaging portion is constructed by a hinge made of a synthetic resin material. Therefore, the dimension error in each of the attaching member, the clip, and the attached member can be absorbed in the assembling work.

In the clip of the invention, the engagement means provided in the first engaging portion and the second engaging portion are grommets that are tightened by inserting the screws. For example, each of the grommets includes a two-divided projection portion having a screw hole, and the grommet is made of a synthetic resin having elasticity. Not only the grommet plays a role in maintaining the waterproof property and in preventing the noise caused by the vibration, but also each of the first engaging portion and the second engaging portion can firmly be fixed without a washer. The grommet that is of the engagement means provided in the second engaging portion can obliquely be provided with respect to the second engaging portion. The oblique engagement means can be inserted straight in the hole of the attaching member while the coupling means is bent at a predetermined angle.

In the clip of the invention, the engagement directions of the engagement means of the first engaging portion and the second engaging portion are provided in axis-line directions that differ from each other by about 90 degrees. The engagement directions may be the same plane or different planes as long as the engagement directions differ from each other by about 90 degrees.

The clip of the invention is used to attach the automotive bumper to the vehicle main body, and the clip of the invention can improve the assembly steps of the assembling work, the dimension error absorption, vibration sound isolation, and the waterproof property.

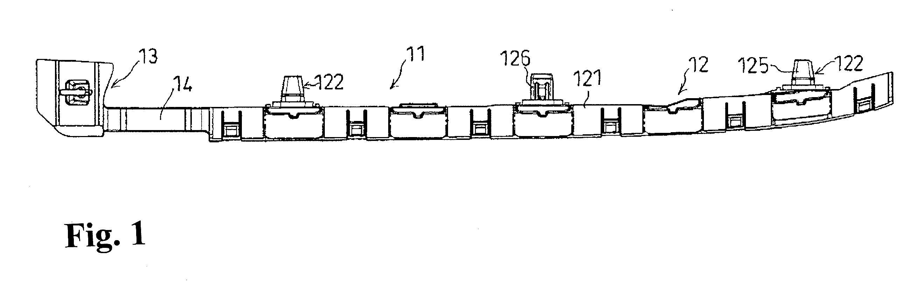

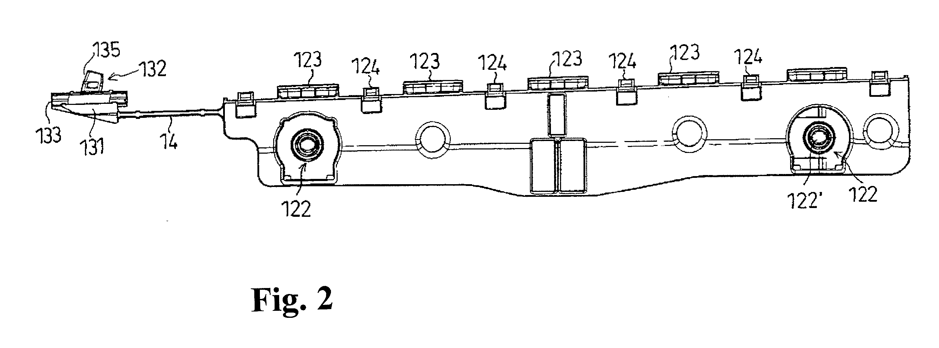

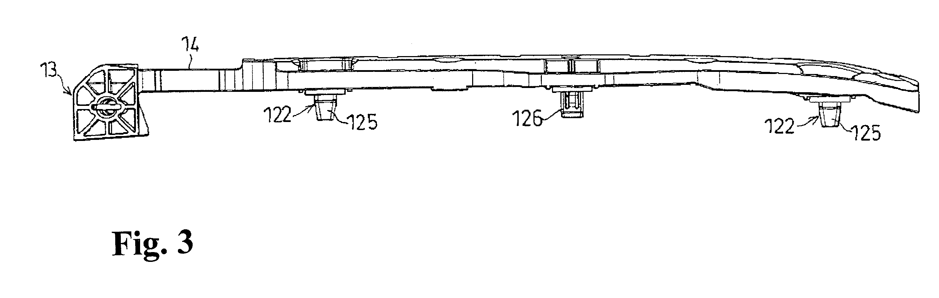

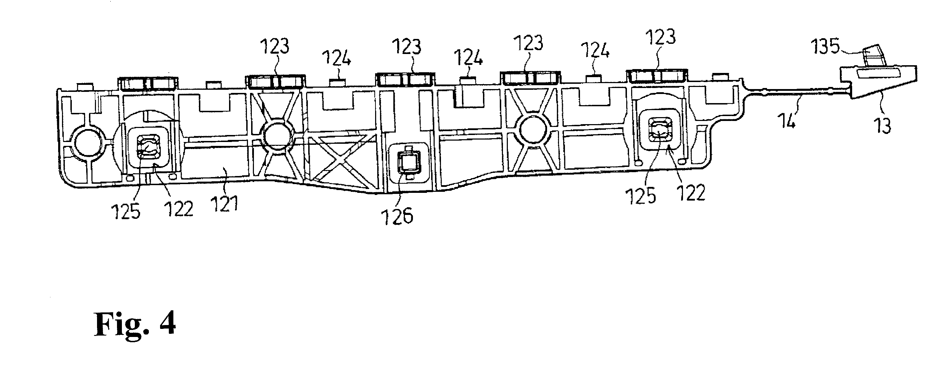

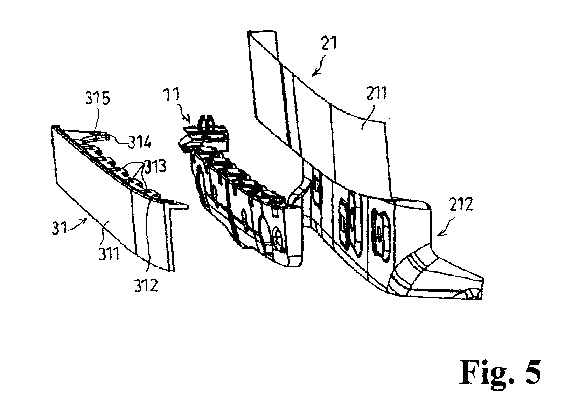

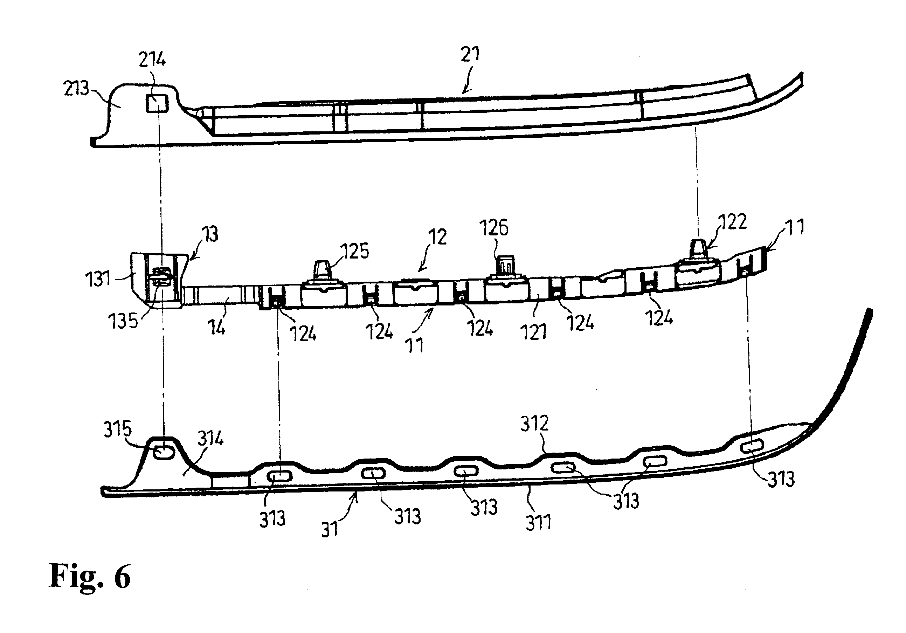

Fig. 1 is a plan view of a clip 11 of the embodiment of the invention. Figs. 2, 3, and 4 are a front view, a bottom view, and a rear view of the clip 11. Fig. 5 is an exploded perspective view of a body 21 that is an example of an attached member, the clip 11, and a bumper 31 that is an example of the attaching member. Fig. 6 is an assembly plan view of the body 21, the clip 11, and the bumper 31. In Figs. 5 and 6, for example, the clip 11 is disposed between the body 21 of the vehicle body that is an example of the attached member and the bumper 31 that is an example of the attaching member and the clip 11 retains and fixes the body 21 and the bumper 31.

As illustrated in Fig. 1, the clip 11 includes a first engaging portion 12, a second engaging portion 13, and coupling means 14, and the first engaging portion 12, the second engaging portion 13, and the coupling means 14 are integrally molded. In the first engaging portion 12, plural (at least two) first engagement means 122 are provided in order to attach the clip 11 to the body 21. For example, second engagement means 132 is provided in the second engaging portion 13. In the second engagement means 132, an engagement direction of a plane differs from that of the first engaging portion 12, and an axis-line direction of an attaching hole differs from that of the first engaging portion 12. The second engagement means 132 is attached to both the bumper 31 and the body 21. For example, the coupling means 14 is made of a synthetic resin having flexibility. The coupling means 14 couples the first engaging portion 12 and the second engaging portion 13.

When the bumper 31 is attached to the body 21 using the clip 11, plural first engagement means 122 provided in the first engaging portion 12 of the clip 11 are attached to the body 21. Then, a leading end portion of an engagement end portion 312 (see Fig. 6) of the bumper 31 and bumper engagement receiving portions 123 (see Fig. 1) provided in the clip 11 are engaged so as to abut against each other. When the engagement end portion 312 of the bumper 31 abuts against the bumper engagement receiving portions 123 of the clip 11, a plurality of projected retaining pawls 124 provided in the clip 11 is fitted in plural engaging holes 313 made in the engagement end portion 312 of the bumper 31. Therefore, once the bumper 31 engages the clip 11, the bumper 31 does not drop out of the clip 11.

When the bumper 31 is attached to the body 21 using the clip 11, the bumper 31 is positioned with respect to the body 21 by positioning means 126. A pawl piece is provided in the positioning means 126, and the pawl piece is hooked on the body 21 after the clip 11 is attached to the body 21, whereby the positioning means 126 does not drop out of the body 21.

The second engaging portion 13 of the clip 11 includes a main body 131 and a bumper inserting portion 133 in addition to the second engagement means 132. The second engaging portion 13 can turn with respect to the first engaging portion 12 by bending or twisting the coupling means 14.

In the clip 11, the bumper 31 and the body 21 can be screwed by the first engaging portion 12 and the second engaging portion 13, in which the engagement directions differ from each other. Therefore, a stress, which is generated in the state in which the bumper 31 is fixed to the body 21 using the clip 11, is dispersed. Accordingly, the aging degradation can be reduced in the fixed portion of each component. The coupling means 14 of the clip 11 can absorb a variation in dimensions of the attaching hole or attaching portion. In the clip 11, because the first engaging portion 12, the second engaging portion 13, and the coupling means 14 are integrally molded, the number of components necessary to fix the bumper 31 to the body 21 is decreased.

The bumper inserting portion 133 of the second engaging portion 13 abuts against an attaching portion 314 provided in the bumper 31. A grommet 135 provided in the second engaging portion 13 is inserted in both an attaching hole 315 of the attaching portion 314 and a body engaging hole 214 of a body attaching portion 213 to commonly tighten the bumper 31, the clip 11, and the body 21. The attaching portion 314 is projected from the same plane as the engagement end portion 312 of the bumper 31, and the body attaching portion 213 is provided in an end portion of the body 21.

In the clip 11, for example, the coupling means 14 that couples the first engaging portion 12 and the second engaging portion 13 is constructed by a hinge made of a synthetic resin material having elasticity. Therefore, not only the dimension error of each of the bumper 31, the clip 11, and the body 21 is absorbed during the assembly, but also the assembling work can be facilitated.

Plural first engagement means 122 are provided in the first engaging portion 12. A grommet 125 having a screw hole 122' is formed in each of the first engagement means 122. When the clip 11 is attached to the body 21, a screw is inserted in the grommet 125 and tightened up after the clip 11 is fitted in the body 21, which allows the clip 11 to be fixed to the body 21. In the second engagement means 132 provided in the second engaging portion 13, the bumper inserting portion 133 in which the engagement end portion 312 of the bumper 31 is inserted is molded, and the grommet 135 is molded perpendicular to the bumper inserting portion 133.

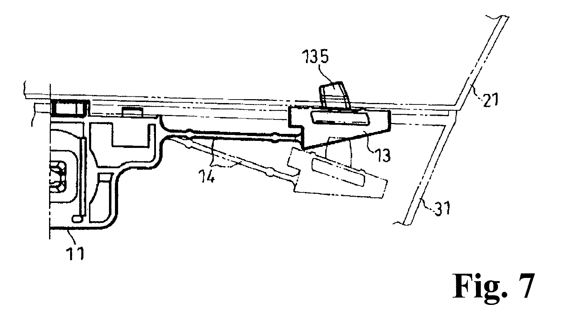

Fig. 7 is an enlarged view illustrating a state in which the body 21 and the bumper 31 are fixed by the clip 11. Not only the grommet 125 and the grommet 135, which are provided in the clip 11, can firmly attach the clip 11, the body 21, and the bumper 31 without a washer, but also the grommet 125 and the grommet 135 play a role in maintaining the waterproof property in each attaching portion and in preventing the noise caused from the attaching portion by the vibration.

The grommet 135 that is of the second engagement means 132 provided in the second engaging portion 13 may be provided in a direction inclined with respect to a plane of the second engaging portion 13. In the case that the grommet 135 is obliquely provided, the grommet 135 can be inserted straight in the holes of the body 21 and the bumper 31 while the coupling means 14 is bent at a predetermined angle.

In the clip 11, the engagement direction of the first engagement means 122 of the first engaging portion 12 differs from the engagement direction of the second engagement means 132 of the second engaging portion 13 by about 90 degrees. There is no limitation to the positions where the first engagement means 122 and the second engagement means 132 are provided as long as the first engagement means 122 and the second engagement means 132 differ from each other in the engagement direction by about 90 degrees.

Although the embodiment of the invention is described in detail above, the invention is not limited to the embodiment. Various changes can be made without departing from the scope of the invention. In the clip of the invention, obviously shapes of the clip 11, the body 21, the bumper 31 and the other parts can be changed without departing from the scope of the invention.

This application claims priority under 35 U.S.C. 119 to Japanese Patent Application No. 2009-089009, filed on April 1, 2009 which application is hereby incorporated by reference in its entirety.

### REFERENCE SIGNS LIST

- 11: clip
- 12: first engaging portion
- 121: main body
- 122: first engagement means
- 123: bumper engagement receiving portion
- 124: retaining pawl
- 125: grommet
- 126: positioning means
- 13: second engaging portion
- 131: main body
- 132: second engagement means
- 133: bumper inserting portion
- 135: grommet
- 14: coupling means
- 21: body
- 211: main body
- 212: bumper attaching portion
- 213: body attaching portion
- 214: body engaging hole
- 31: bumper
- 311: bumper main body
- 312: engagement end portion
- 313: engaging hole
- 314: attaching portion

## Claims

1. A clip retaining an attaching member and an attached member while the attaching member and the attached member are fixed to each other, the clip comprising:
a first engaging portion (12) having a plurality of first engagement means (122), to be attached to the attached member;
a second engaging portion (13) having an engagement direction different from an engagement direction of the first engaging portion (12), the second engaging portion (13) having second engagement means (132) attached to both the attaching member and the attached member; and
coupling means (14) for coupling the first engaging portion (12) and the second engaging portion (13), the coupling means (14) having flexibility,
**characterized in that**
the second engaging portion (13) of the clip (11) includes a main body (131) and a bumper inserting portion (133) in addition to the second engagement means (132).

2. The clip according to claim 1, wherein the coupling means (14) is a hinge.

3. The clip according to claim 1 or 2, wherein the first engagement means (122) and the second engagement means (132) include grommets (125, 135), screws being inserted in the grommets (125, 135) to tighten the grommets (125, 135).

4. The clip according to any one of claims 1 to 3, wherein an engagement direction of the first engagement means (122) and an engagement direction of the second engagement means (132) are orthogonal to each other.

5. The clip according to any one of claims 1 to 4, wherein a vehicle main body (21) that is of the attached member and the automotive bumper (31) that is of the attaching member are retained and fixed.

6. The clip according to any one of claims 3 to 5, wherein a grommet (135) in the second engaging portion (13) is inserted in both an attaching hole (315) of an attaching portion (314), which projects from a same plane as the engagement end portion (312) of the bumper (31), and a body engaging hole (214) of a body attaching portion (213) being provided in an end portion of a body (21) so as to commonly tighten the bumper (31), the clip (11) and the body (21).

## Patentansprüche

1. Klammer, welche ein Befestigungselement und ein befestigtes Element hält, während das Befestigungselement und das befestigte Element aneinander befestigt werden, wobei die Klammer umfasst:
einen ersten Eingriffsabschnitt (12) mit einer Vielzahl von ersten Eingriffsmitteln (122), um am befestigten Element befestigt zu werden;
einen zweiten Eingriffsabschnitt (13) mit einer Eingriffsrichtung, welche sich von der Eingriffsrichtung des ersten Eingriffsabschnitts (12) unterscheidet, wobei der zweite Eingriffsabschnitt (13) zweite Eingriffsmittel (132) aufweist, welche am Befestigungselement und am befestigten Element befestigt sind; und
Kopplungsmittel (14) zum Koppeln des ersten Eingriffsabschnitts (12) und des zweiten Eingriffsabschnitts (13), wobei das Kopplungsmittel (14) eine Biegsamkeit aufweist,
**dadurch gekennzeichnet, dass**
der zweite Eingriffsabschnitt (13) der Klammer (11) einen Hauptkörper (131) und einen Stoßstangeneinsetzabschnitt (133) zusätzlich zu den zweiten Eingriffsmitteln (132) enthält.

2. Klammer nach Anspruch 1, wobei das Kopplungsmittel (14) ein Gelenk ist.

3. Klammer nach Anspruch 1 oder 2, wobei die ersten Eingriffsmittel (122) und die zweiten Eingriffsmittel (132) Befestigungstüllen (125, 135) enthalten, wobei Schrauben in die Befestigungstüllen (125, 135) eingesetzt werden, um die Befestigungstüllen (125, 135) zu spannen.

4. Klammer nach einem der Ansprüche 1 bis 3, wobei eine Eingriffsrichtung der ersten Eingriffsmittel (122) und eine Eingriffsrichtung der zweiten Eingriffsmittel (132) orthogonal zueinander sind.

5. Klammer nach einem der Ansprüche 1 bis 4, wobei ein Fahrzeughauptkörper (21), welcher das befestigte Element ist, und die Kraftfahrzeugstoßstange (31), welche das Befestigungselement ist, gehalten und befestigt werden.

6. Klammer nach einem der Ansprüche 3 bis 5, wobei eine Befestigungstülle (135) im zweiten Eingriffsabschnitt (13) in ein Befestigungsloch (315) eines Befestigungsabschnitts (314), welcher von einer gleichen Ebene wie der Eingriffsendabschnitt (312) der Stoßstange (31) vorspringt, und ein Körpereingriffsloch (214) eines Körperbefestigungsabschnitts (213) eingesetzt wird, welcher an einem Endabschnitt des Körpers (21) vorgesehen ist, um die Stoßstange (31), die Klammer (11) und den Körper (21) gemeinsam zu spannen.

## Revendications

1. Clip retenant un élément de fixation et un élément fixé tandis que l'élément de fixation et l'élément fixé sont fixés l'un à l'autre, le clip comprenant:
une première partie s'engageant (12) comportant une pluralité de premiers moyens d'engagement (122), destinée à être fixée à l'élément fixé;
une seconde partie s'engageant (13) ayant un sens d'engagement différent d'un sens d'engagement de la première partie s'engageant (12), la seconde partie s'engageant (13) ayant un second moyen d'engagement (132) fixée à la fois à l'élément de fixation et à l'élément fixé; et
un moyen d'accouplement (14) pour accoupler la première partie s'engageant (12) et la seconde partie s'engageant (13), le moyen d'accouplement (14) étant flexible,
**caractérisé en ce que**
la seconde partie s'engageant (13) du clip (11) comprend un corps principal (131) et une partie d'insertion de pare-chocs (133) en plus du second moyen d'engagement (132).

2. Clip selon la revendication 1, où le moyen d'accouplement (14) est une charnière.

3. Clip selon la revendication 1 ou 2, où le premier moyen d'engagement (122) et le second moyen d'engagement (132) comprennent des passe-fils (125, 135), des vis insérées dans les passe-fils (125, 135) pour serrer les passe-fils (125, 135).

4. Clip selon l'une des revendications 1 à 3, où un sens d'engagement du premier moyen d'engagement (122) et un sens d'engagement du second moyen d'engagement (132) sont orthogonaux l'un par rapport à l'autre.

5. Clip selon l'une des revendications 1 à 4, où un corps principal de véhicule (21) qui est de l'élément fixé et le pare-chocs automobile (31) qui est de l'élément de fixation sont retenus et fixés.

6. Clip selon l'une des revendications 3 à 5, où un passe-fil (135) dans la seconde partie s'engageant (13) est inséré à la fois dans un trou de fixation(315) d'une partie de fixation (314) qui saillit d'un même plan que la partie d'extrémité d'engagement (312) du pare-chocs (31), et un trou s'engageant du corps (214) d'une partie fixant le corps (213) étant prévu dans une partie d'extrémité d'un corps (21) de façon à serrer solidairement le pare-chocs (31), le clip (11) et le corps (21).
